# EUROPEAN PATENT SPECIFICATION

(11) **EP 4 258 287 B1**
(45) Date of publication and mention of the grant of the patent: **05.08.2026**
(21) Application number: 21902166.4
(22) Date of filing: 27.09.2021
(51) Int. Cl.: G21C 7/14, G21C 7/10, G21C 9/00

(54) **CONTROL ROD CONTROL DEVICE AND REACTOR**
STEUERSTABSTEUERUNGSVORRICHTUNG UND REAKTOR
DISPOSITIF DE COMMANDE DE TIGE DE COMMANDE ET RÉACTEUR

(30) Priority: 11.12.2020 CN 202011450585
(43) Date of publication of application: 11.10.2023
(73) Proprietor: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: LIANG, Huo, Shenzhen, Guangdong 518031 (CN); CUI, Xuyang, Shenzhen, Guangdong 518031 (CN); LUO, Hanyan, Shenzhen, Guangdong 518031 (CN); CHEN, Yunyin, Shenzhen, Guangdong 518031 (CN); YANG, Jiang, Shenzhen, Guangdong 518031 (CN); LIU, Jinlin, Shenzhen, Guangdong 518031 (CN); WANG, Xianmao, Shenzhen, Guangdong 518031 (CN); JI, Wenying, Shenzhen, Guangdong 518031 (CN); LIU, Zhonghao, Shenzhen, Guangdong 518031 (CN); LU, Changdong, Shenzhen, Guangdong 518031 (CN); CHEN, Yichen, Shenzhen, Guangdong 518031 (CN); LIU, Jianchang, Shenzhen, Guangdong 518031 (CN); OUYANG, Yong, Shenzhen, Guangdong 518031 (CN); SHEN, Yonggang, Shenzhen, Guangdong 518031 (CN); LU, Xianghui, Shenzhen, Guangdong 518031 (CN)
(74) Representative: Westphal, Mussgnug & Partner, Patentanwälte mbB
(86) International application number: PCT/CN2021/121078
(87) International publication number: WO 2022/121458

(56) References cited:
- CN-A- 107 633 886
- CN-A- 108 922 637
- CN-A- 111 667 929
- CN-A- 111 780 960
- CN-A- 112 670 002
- JP-A- S60 252 297
- US-A- 3 721 462
- US-B2- 10 636 531

## Description

### FIELD OF THE INVENTION

The invention relates to the technical field of reactor system equipment, in particular to a control rod control device and a reactor.

### DESCRIPTION OF THE RELATED ART

A control rod assembly is a tool for rapid control of reactivity, which adjusts the power of a reactor during normal operations, and quickly introduces negative reactivity to initiate a reactor trip to ensure nuclear safety under accident conditions.

Under normal conditions, a bottom of a drive rod is connected to a connecting handle of the control rod assembly via threaded connection. If a pressure casing of the control rod driving mechanism ruptures, the driving rod will be out of control and ejected under the action of a huge pressure difference, which will then drive the control rod assembly out of the core of the reactor. If the control rod assembly that has the deepest insertion depth and is the most valuable is out of control and ejected, a large amount of positive reactivity will be introduced into the core in a short period of time, resulting in a sudden increase in the core power, which in turn will cause damage to the fuel cladding and release of a large amount of radionuclides, threatening the personal safety of the power plant staff and the public.

Publications JP S60 252297 A and US 3 721 462 A are considered to be relevant to the present application.

### SUMMARY OF THE INVENTION

The technical problem to be solved by the present invention is to provide a control rod control device and a reactor using the device to solve the defect of uncontrolled ejection of the control rod. This problem is solved by a control rod control device having the features of claim 1 and by a reactor having the features of claim 11.

The technical solution adopted by the present invention to solve the technical problem is providing a control rod control device that includes:
an upper driving rod comprising an accommodating cavity in an interior of the upper driving rod;
a lower driving rod detachably connected to a bottom of the upper driving rod;
a trigger assembly arranged in the accommodating cavity and comprising a trigger mechanism and a trigger pin, the trigger mechanism configured to keep the trigger pin in a locked state, the trigger mechanism operable to trigger displacement of the trigger pin when the upper drive rod moves upward with a certain acceleration; and
a support member arranged between the upper driving rod and the lower driving rod and linked with the trigger pin;
wherein when the trigger pin is in the locked state, the support member supports the lower driving rod to be fixedly arranged at a lower portion of the upper driving rod; when the trigger pin is displaced, the support member folds, and the lower driving rod becomes separated from the upper driving rod and falls off by gravity,
wherein the trigger mechanism is disposed in the accommodating cavity, and comprises a first spring, a trigger member, and a locking mechanism arranged in that order from top to bottom; the first spring comprises an upper end fixed on a top of the accommodating cavity, and a lower end fixedly connected with the trigger member;
wherein the locking mechanism is arranged between the trigger pin and the trigger member, and in a locked state, the locking mechanism keeps the trigger pin in the locked state; in a triggering state, the trigger member triggers the locking mechanism to unlock, thus releasing the trigger pin.

Preferably, the accommodating cavity includes an upper cavity and a lower cavity, the upper cavity and the lower cavity are respectively arranged at an upper side and a lower side of an interior of the upper driving rod, and a connecting hole is provided between the upper cavity and the lower cavity.

Preferably, a boss is fixed on the bottom of the upper driving rod, and a groove matching with the boss is formed in a top of the lower driving rod.

Preferably, the locking mechanism includes a pushing member, an elastic tab, a twist trigger lever and a support trigger lever;
wherein a pair of horizontally spaced brackets is fixed in the accommodating cavity, a center of the bracket defines a sliding hole, a lower section of the pushing member slidably passes through the sliding hole, and a bottom of the pushing member contacts a free end of the elastic tab, and the other end of the elastic tab is fixed on an inner wall surface of the accommodating cavity;
wherein the twist trigger lever is located close to a lower side of the elastic tab, and one end of the twist trigger lever is connected to the inner wall surface of the accommodating cavity through a torsion spring;
wherein an upper end of the support trigger lever abuts against a free end of the twist trigger lever, a bottom of the support trigger lever is rotatably hinged in the accommodating cavity, and a lower free end of the support trigger lever locks the trigger pin;
wherein when the elastic tab is pressed to deform downward, the twist trigger lever can be pressed to rotate downward to release the upper end of the support trigger lever, such that the support trigger lever can be rotated to unlock the trigger pin.

Preferably, in a natural state of the twist trigger lever, a main body of the twist trigger lever is arranged in a horizontal direction and is parallel to the elastic tab, and the support trigger lever comprises a long lever and short lever that are perpendicular to each other, when the twist trigger lever is horizontal, a free end of the twist trigger lever supports the long lever to be in a vertical state, restraining the support trigger lever from twisting.

Preferably, the elastic coefficient of the first spring, the weight of the trigger member and a distance between the trigger member and the pushing member when the trigger member is normally suspended match with an acceleration of upward movement of the upper driving rod to ensure that the trigger member will not collide with the pushing member by mistake during normal operation, only when the upper driving rod moves upward with a large acceleration, the first spring is stretched, and the triggering member collides with the pushing member, so that the pushing member produces a relative displacement along the brackets.

Preferably, an upper section and a lower section of the trigger pin respectively define a first through hole and a second through hole, a second spring is connected between the trigger pin and a top of the lower cavity, and when the trigger pin is in the locked state, the trigger mechanism is engagingly inserted into the first through hole, and the second spring is pressurized to store energy.

Preferably, the trigger pin is elongated, the connecting hole matches with the trigger pin, and the connecting hole is connected with the trigger pin by a clearance fit.

Preferably, the support member comprises two symmetrically arranged supporting teeth that are rotatably connected to a wall surface of the accommodating cavity;
wherein the upper driving rod and the lower driving rod cooperatively define a through slot at a joint of the upper driving rod and the lower driving rod, when the trigger pin is in the locked state, opposite inner ends of the supporting teeth are pressed against the trigger pin, and outer ends extend into the through slot to lock the lower driving rod; when the trigger pin is displaced downward, the opposite inner ends of the supporting teeth are inserted into the second through hole, and the outer ends rotate inward and disengage from the through slot of the lower driving rod.

Preferably, multiple through water flow holes are provided in a circumferential direction of the upper driving rod and the lower driving rod, and a joint plane of the upper driving rod and the lower driving rod is also provided with the water flow holes.

The present invention further provides a reactor, including a core, a control rod assembly inserted into the core, and a driving mechanism for driving the control rod assembly, the reactor further including the control rod control device according to any one of the above.

Implementation of the present invention has at least the following beneficial effects:
The present invention utilizes the separable design of the upper driving rod and the lower driving rod, and uses the mechanism of triggering the trigger mechanism in response to the upward movement of the upper driving rod with a large acceleration. The trigger mechanism operates to displace the trigger pin. When the trigger pin is displaced, the support member folds, and the lower driving rod is separated from the upper driving rod and falls off by gravity. Under the accident condition in which the pressure casing of the control rod driving mechanism ruptures, the upper driving rod is ejected upward with a large acceleration, and the trigger mechanism responds, so that the upper driving rod and the lower driving rod are separated. The upper driving rod is ejected upward by the pressure difference, and the lower driving rod and the control rod assembly fall down under the action of gravity and are inserted into the reactor core. The connection between the driving rod and the control rod assembly are automatically disconnected, and uncontrolled ejection of the control rod is avoided, which ensures that a large amount of positive reactivity will not be introduced into the reactor core in a short period of time, reduces the probability of cladding damage, and improves the safety of the reactor.

### BRIEF DESCRIPTION OF THE DRAWINGS

In order to explain the embodiments of the present invention or the technical solutions in the prior art more clearly, accompanying drawings used in the description of the embodiments or the prior art are briefly described below. Obviously, the accompanying drawings in the following description illustrate only some embodiments of the present invention. For those of ordinary skill in the art, other drawings can also be obtained based on these drawings without creative efforts.
Fig. 1 illustrates the state of a trigger pin and a support trigger lever before triggering according to the present invention.
Fig. 2 illustrates the state of the trigger pin and the support trigger lever after being triggered according to the present invention.
Fig. 3 shows the overall device connected between a driving rod and a control rod assembly according to the present disclosure.
Fig. 4 illustrates a trigger mechanism in an upper cavity according to the present disclosure.
Fig. 5 is a cross-sectional view of the trigger pin of the present disclosure.

Reference numerals: 1 Upper driving rod; 2 Lower driving rod; 3 Trigger pin; 4 Support member; 5 First spring; 6 Trigger member; 7 Pushing member; 8 Elastic tab; 9 Twist trigger lever; 10 Support trigger lever; 11 Bracket; 12 Support stage; 13 Second spring; 14 Slot; 15 Water flow hole; 16 Connecting plate; 17 Driving rod; 18 Control rod assembly; 101 Upper cavity; 102 Lower cavity; 103 Connecting hole; 104 Boss; 201 Groove; 301 First through hole; 302 Second through hole; 1001 Long lever; 1002 Short lever; 1101 Sliding hole.

### DETAILED DESCRIPTION OF EMBODIMENTS

In order to make the purposes, technical solutions and advantages of the embodiments of the present invention become more apparent, the technical solutions in the embodiments of the present invention will be clearly and thoroughly described below with reference to the accompanying drawings. Obviously, those described are some embodiments but not all embodiments of the present invention.

### Embodiments

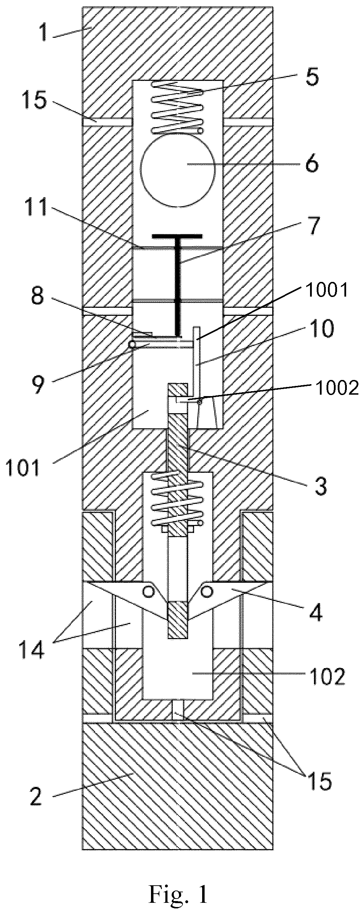

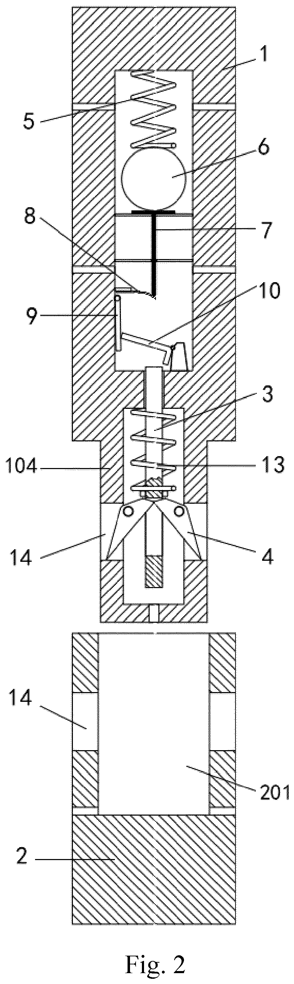

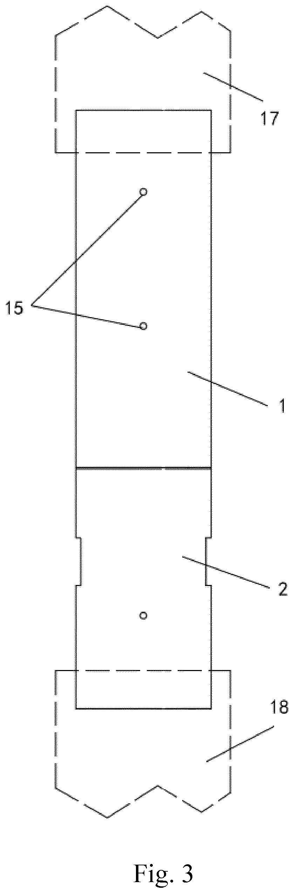

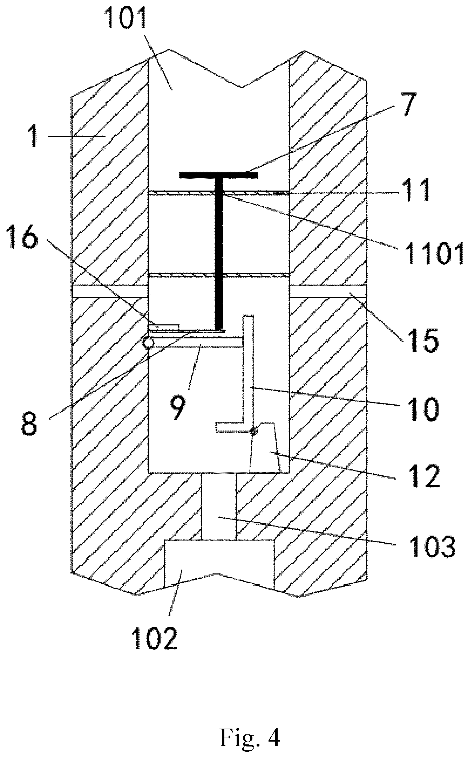

A control rod control device of this embodiment can be used as a control rod anti-ejection device in a reactor. Referring to Figs. 1 to 4, the device includes a main body for being connected between a control rod assembly 18 and a driving rod 17 of a driving mechanism. The main body of the device includes an upper driving rod 1 with an accommodating cavity formed therein, and a lower driving rod 2 detachably connected to a bottom of the upper driving rod 1. The upper driving rod 1 and the lower driving rod 2 are both made of a steel alloy material. It can be understood that, in some embodiments, the control rod control device may be used in a reactor, and the reactor may include a core, a control rod assembly inserted into the core, and a driving mechanism for driving the control rod assembly. The control rod control device is connected between the control rod assembly and the driving mechanism, which can effectively prevent rod ejection accident of the control rod assembly of the reactor.

A trigger assembly is arranged between the upper driving rod 1 and the lower driving rod 2. The trigger assembly is disposed in the accommodating cavity and includes a trigger mechanism and a trigger pin 3. The trigger mechanism is used to keep the trigger pin 3 in a locked state. When the upper driving rod 1 moves upward with a great acceleration, the trigger mechanism operates to displace the trigger pin 3.

A support member 4 is disposed between the upper driving rod 1 and the lower driving rod 2 and is linked with the trigger pin 3. In this embodiment, the support member 4 is disposed at a joint plane of the upper driving rod 1 and the lower driving rod 2.

When the trigger pin 3 is in the locked state, the support member 4 supports the lower driving rod 2 to be fixedly arranged at a lower portion of the upper driving rod 1. Once the trigger pin 3 is displaced, the support member 4 folds, with the lower driving rod 2 becoming separated from the upper driving rod 1 and falling off by gravity. In this embodiment, when the support member 4 is unfolded to its maximum support arm span, the support member 4 lifts the lower driving rod 2 to be fixedly arranged at the lower portion of the upper driving rod 1; when the trigger pin 3 is displaced, the support member 4 folds, with the lower driving rod 2 becoming separated from the upper drive rod 1 and falling off by gravity.

During installation of the device, the lower driving rod 2 and a connection handle of the control rod assembly 18 are connected via threaded connection, and the upper driving rod 1 and a detachable connector of the driving rod 17 of the control rod driving mechanism are connected via threaded connection.

Referring to Fig. 1, in this embodiment, the accommodating cavity includes an upper cavity 101 and a lower cavity 102 respectively arranged at an upper side and a lower side of an interior of the upper driving rod. The upper cavity 101 and the lower cavity 102 communicate with each other via a connecting hole 103. In realizing the detachable connection between the lower driving rod 2 and the upper driving rod 1, a boss 104 is fixed on the bottom of the upper driving rod 1, and a groove 201 matching with the boss 104 is formed on a top of the lower driving rod 2, and the boss 104 matches with and is engaged into the groove 201. The boss 104 can be a square boss, and the corresponding groove 201 can be a square groove, so that relative rotation is prevented between the boss 104 and the groove 201. At the same time, in this embodiment, preferably, the joint plane of the upper driving rod 1 and the lower driving rod 2, that is, a contact surface of the groove 201 matching with the boss 104, is provided with a water flow hole 15 to ensure that the upper driving rod 1 and the lower driving rod 2 can be quickly disengaged when separating.

The trigger mechanism is arranged in the upper cavity 101. Specifically, the trigger mechanism includes a first spring 5, a trigger member 6 and a locking mechanism that are arranged in an interior of the upper cavity 101 in that order from top to bottom. The first spring 5 includes an upper end fixed on a top of the accommodating cavity, and a lower end fixedly connected with the trigger member 6. In this embodiment, the trigger member 6 can be a steel ball, the weight of which can be adjusted according to actual needs. The steel ball triggers the locking mechanism to unlock by colliding with locking mechanism due to the inertia of the steel ball.

The locking mechanism is arranged between the trigger pin 3 and the triggering member 6. In the locked state, the locking mechanism keeps the trigger pin 3 in the locked state; in a triggering state, the triggering member 6 triggers and unlocks the locking mechanism to release the trigger pin 3.

In this embodiment, the locking mechanism includes a pushing member 7, an elastic tab 8, a twist trigger lever 9 and a support trigger lever 10. The upper end of the first spring 5 is fixed on a top of the upper cavity 101, and the lower end is fixedly connected with the trigger member 6. A pair of horizontally spaced brackets 11 is fixed in the upper cavity 101. A center of the bracket 11 defines a sliding hole 1101, and a lower section of the pushing member 7 slidably passes through the sliding hole 1101. A bottom of the pushing member 7 is in contact with a free end of the elastic tab 8, and the other end of the elastic tab 8 is fixed on an inner wall of the upper cavity 101 through a connecting plate 16. The twist trigger lever 9 is located close to a lower side of the elastic tab 8, and one end of the twist trigger lever 9 is rotatably connected to the inner wall of the upper cavity 101 through a torsion spring. The pushing member 7 can be a T-shaped member, the elastic tab 8 can be a spring tab, and the support trigger lever 10 can be an L-shaped trigger rod.

A bottom of the support trigger lever 10 is hinged on a support stage 12 through a torsion spring, and can swing around the support stage 12. The support stage 12 is fixed on an inner wall of a bottom of the upper cavity 101. It can be understood that the support trigger lever 10 can also be rotatably mounted on the inner wall of the accommodating cavity directly through a rotation axle. An upper end of the support trigger lever 10 abuts against the free end of the twist trigger lever 9, a bottom of the support trigger lever 10 is rotatably hinged in the accommodating cavity, and a lower free end of the support trigger lever 10 locks the trigger pin 3.

When the elastic tab 8 is pressed to deform downward, the twist trigger lever 9 can be pressed to rotate downward to release the upper end of the support trigger lever 10, such that the support trigger lever 10 can be rotated to unlock the trigger pin 3.

The trigger pin 3 includes a main body passing through the connecting hole 103. Upper and lower sections of the trigger pin 3 respectively define a first through hole 301 and a second through hole 302. A second spring 13 is connected between the trigger pin 3 and the top of the lower cavity 102. When the trigger pin 3 is in the locked state, a short lever 1002 of the support trigger lever 10 is engagingly inserted into the first through hole 301, and the second spring 13 is pressurized to store energy. Preferably, the trigger pin 3 is elongated, and the connecting hole 103 matches with the trigger pin 3. For example, the trigger pin 3 is an elongated cuboid with a square cross-section, and the connecting hole 103 is a square hole matching with the trigger pin 3. The connecting hole 103 is connected with the trigger pin 3 by a clearance fit, so that the trigger pin 3 can only make a piston movement in an up-and-down direction and cannot make a twist movement.

Preferably, in a natural state of the twist trigger lever 9, the main body of the twist trigger lever 9 is arranged in a horizontal direction and is parallel to the elastic tab 8. The support trigger lever 10 is composed of a long lever 1001 and a short lever 1002 that are perpendicular to each other. When the twist trigger lever 9 is horizontal, the free end of the twist trigger lever 9 supports the long lever 1001 to be in a vertical state, and restrains the support trigger lever 10 from twisting. With the rotation restriction on the support trigger lever 10, the short lever 1002 of the support trigger lever 10 is engagingly inserted into the first through hole 301, thus limiting the downward displacement of the trigger pin 3 and keeping the trigger pin 3 stationary. At the same time, such a design makes it possible to press the twist trigger lever 9 to rotate downward even when the elastic tab 8 is pressed downward to make a small deformation. Therefore, with the free end of the twist trigger lever 9 becoming separated from the support trigger lever 10, the support trigger lever 10 is released, making the support trigger lever 10 rotate under the force of the torsion spring, such that the short lever 1002 of the support trigger lever 10 becomes disengaged from the first through hole 301 of the trigger pin 3, and the trigger pin 3 is released from the locked state.

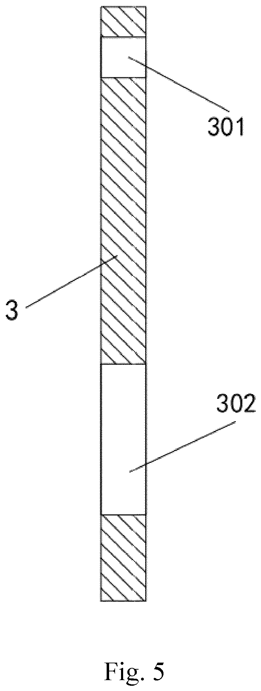

Referring to Figs. 1, 2 and 5, the support member 4 in this embodiment includes two symmetrically arranged supporting teeth. The supporting teeth are generally triangular, and are rotatably connected to a wall surface of the lower cavity 102 through torsion springs. The upper driving rod 1 and the lower driving rod 2 cooperatively define a through slot 14 at the joint of the upper driving rod 1 and the lower driving rod 2. When the trigger pin 3 is in the locked state, opposite inner ends of the supporting teeth are pressed against the trigger pin 3, and outer ends extend into the through slot 14 to lock the lower driving rod 2, realizing the fixed connection of the lower driving rod 2 at the bottom of the upper driving rod 1. When the trigger pin 3 is displaced downward along the through hole 103, the opposite inner ends of the supporting teeth are inserted into the second through hole 302, and the outer ends of the supporting teeth rotate inwardly and disengage from the through slot 14 of the lower driving rod 2, such that the lower driving rod 2 sleeved on the bottom of the upper driving rod 1 automatically falls off by gravity.

In this embodiment, multiple water flow holes 15 are preferably provided in the circumferential direction of the upper driving rod 1 and the lower driving rod 2. With the multiple water flow holes 15 arranged along the circumferential direction of the upper driving rod 1, the upper cavity 101 can be communicated with the external environment, such that coolant in the cavity can freely enter and exit through the water flow holes 15, which ensures that the trigger member 6 can move up and down freely in the cavity without excessive resistance. The number and inner diameter of the water flow holes 15 depend on the volume and mass of the trigger member 6, and can be optimized according to actual needs.

The working principle of the device is as follows: before triggering of the trigger mechanism, the upper driving rod 1 and the lower driving rod 2 are in an engaged state, and the supporting teeth can bear the gravity of the lower driving rod 2 and the control rod assembly 18, so that the upper driving rod 1 and the lower driving rod are connected together.

When a rod ejection accident occurs, the pressure at the top of the driving rod 17 of the driving mechanism suddenly drops to one atmospheric pressure, while the pressure at the bottom of the driving rod 17 is maintained at the order of 10⁷Pa (taking PWR as an example, the corresponding pressure is about 15.5MPa). Under the driving pressure generated by the huge pressure difference between the top and bottom ends, the upper driving rod 1 is ejected upward with a certain acceleration, and drives the top of the first spring 5 to move upward. Due to the inertia of the trigger member 6, the trigger member 6 has a tendency to maintain its original static state, so that the spring is stretched. As such, the pushing member 7 that moves upward with the upper driving rod 1 collides with the trigger member 6, so that the pushing member 7 is moved downward, triggering the twist trigger lever 9 to swing downward, and the support trigger lever 10 also swings downward, thus releasing the trigger pin 3. Under the pushing of the second spring 13, the trigger pin 3 moves downward, the lower through hole of the trigger pin 3 is aligned with the pressing end of the supporting tooth, and the pressing end loses support function, so that the supporting tooth rotates downward under the action of the gravity of the lower driving rod 2 and the control rod assembly 18, and the pressing end enters the lower through hole, allowing the upper driving rod 1 and lower driving rod 2 to become separated. As a result, the upper driving rod 1 is ejected upward under the pressure difference, and the lower driving rod 2 and the control rod assembly 18 fall down and are inserted into the reactor core under the action of gravity. The uncontrolled ejection of the control rods is avoided, which ensures that a large amount of positive reactivity will not be introduced into the reactor core in a short period of time, reduces the probability of cladding damage, and improves the safety of the reactor.

It is worth noting that the elastic coefficient of the first spring 5, the weight of the trigger member 6, and the distance between the trigger member 6 and the pushing member 7 when the trigger member 6 is normally suspended need to match each other according to the acceleration of the upper drive rod 1 to ensure that the trigger member 6 will not collide with the steel pin by mistake during normal operation, and only collide to trigger the downward insertion action of the pushing member 7 under the rod-ejection condition. The acceleration of the upper driving rod 1 is further related to the operating pressure of the reactor, the cross-sectional area of the driving rod and the mass of the upper driving rod 1. Therefore, the control rod anti-ejection device needs to be designed according to a specific reactor, but this does not affect implementation of the present solution in principle.

It should be noted that, in this disclosure, relational terms such as first and second are used only to distinguish one entity or operation from another entity or operation, and do not necessarily require or imply that any such actual relationship or sequence exists between these entities or operations. Moreover, the terms "comprise", "include" or any other variations thereof are intended to encompass non-exclusive inclusion such that a process, method, article or device comprising a list of elements includes not only those elements, but also includes other elements that are not explicitly listed or elements inherent to such a process, method, article or device. Unless otherwise restricted, an element defined by the phrase "comprises a..." does not preclude the presence of an additional identical element in the process, method, article, or device that includes the element.

The above embodiments are only used to illustrate the technical solutions of the present invention, rather than limiting the scope of the present invention. Although the present invention has been described in detail with reference to the above embodiments, it should be understood by those of ordinary skill in the art that various modifications can be made to the technical solutions described in the above embodiments.

## Claims

1. A control rod control device comprising:
an upper driving rod (1) comprising an accommodating cavity in an interior of the upper driving rod (1);
a lower driving rod (2) detachably connected to a bottom of the upper driving rod (1);
a trigger assembly arranged in the accommodating cavity and comprising a trigger mechanism and a trigger pin (3), the trigger mechanism configured to keep the trigger pin (3) in a locked state, the trigger mechanism operable to trigger displacement of the trigger pin (3) when the upper driving rod (1) moves upward with a certain acceleration; and
a support member (4) arranged between the upper driving rod (1) and the lower driving rod (2) and linked with the trigger pin (3);
wherein when the trigger pin (3) is in the locked state, the support member (4) supports the lower driving rod (2) to be fixedly arranged at a lower portion of the upper driving rod (1); when the trigger pin (3) is displaced, the support member (4) folds, and the lower driving rod (2) becomes separated from the upper driving rod (1) and falls off by gravity;
wherein the trigger mechanism is disposed in the accommodating cavity, and comprises a first spring (5), a trigger member (6), and a locking mechanism (7, 8, 9, 10) arranged in that order from top to bottom; the first spring (5) comprises an upper end fixed on a top of the accommodating cavity, and a lower end fixedly connected with the trigger member (6);
wherein the locking mechanism is arranged between the trigger pin (3) and the trigger member (6), and in a locked state, the locking mechanism keeps the trigger pin (3) in the locked state; in a triggering state, the trigger member (6) triggers the locking mechanism to unlock, thus releasing the trigger pin (3).

2. The control rod control device according to claim 1, wherein the accommodating cavity comprises an upper cavity (101) and a lower cavity (102), the upper cavity (101) and the lower cavity (102) are respectively arranged at an upper side and a lower side of an interior of the upper driving rod (1), and a connecting hole (103) is provided between the upper cavity (101) and the lower cavity (102).

3. The control rod control device according to claim 2, wherein a boss (104) is fixed on the bottom of the upper driving rod (1), and a groove (201) matching with the boss (104) is formed in a top of the lower driving rod (2).

4. The control rod control device according to claim 1, wherein the locking mechanism comprises a pushing member (7), an elastic tab (8), a twist trigger lever (9) and a support trigger lever (10);
wherein a pair of horizontally spaced brackets (11) is fixed in the accommodating cavity, a center of the bracket (11) defines a sliding hole (1101), a lower section of the pushing member (7) slidably passes through the sliding hole (1101), and a bottom of the pushing member (7) contacts a free end of the elastic tab (8), and the other end of the elastic tab (8) is fixed on an inner wall surface of the accommodating cavity;
wherein the twist trigger lever (9) is located close to a lower side of the elastic tab (8), and one end of the twist trigger lever (9) is connected to the inner wall surface of the accommodating cavity through a torsion spring;
wherein an upper end of the support trigger lever (10) abuts against a free end of the twist trigger lever (9), a bottom of the support trigger lever (10) is rotatably hinged in the accommodating cavity, and a lower free end of the support trigger lever (10) locks the trigger pin (3);
wherein when the elastic tab (8) is pressed to deform downward, the twist trigger lever (9) can be pressed to rotate downward to release the upper end of the support trigger lever (10), such that the support trigger lever (10) can be rotated to unlock the trigger pin (3).

5. The control rod control device according to claim 4, wherein in a natural state of the twist trigger lever (9), a main body of the twist trigger lever (9) is arranged in a horizontal direction and is parallel to the elastic tab (8), and the support trigger lever (10) comprises a long lever (1001) and a short lever (1002) that are perpendicular to each other, when the twist trigger lever (9) is horizontal, a free end of the twist trigger lever (9) supports the long lever (1001) to be in a vertical state, restraining the support trigger lever (10) from twisting.

6. The control rod control device according to claim 4, wherein the elastic coefficient of the first spring (5), the weight of the trigger member (6) and a distance between the trigger member (6) and the pushing member (7) when the trigger member (6) is normally suspended match with an acceleration of upward movement of the upper driving rod (1) to ensure that the trigger member (6) will not collide with the pushing member (7) by mistake during normal operation, only when the upper driving rod (1) moves upward with a large acceleration, the first spring (5) is stretched, and the triggering member (6) collides with the pushing member (7), so that the pushing member (7) produces a relative displacement along the brackets (11).

7. The control rod control device according to claim 2, wherein an upper section and a lower section of the trigger pin (3) respectively define a first through hole (301) and a second through hole (302), a second spring (13) is connected between the trigger pin (3) and a top of the lower cavity (102), and when the trigger pin (3) is in the locked state, the trigger mechanism is engagingly inserted into the first through hole (301), and the second spring (13) is pressurized to store energy.

8. The control rod control device according to claim 7, wherein the trigger pin (3) is elongated, the connecting hole (103) matches with the trigger pin (3), and the connecting hole (103) is connected with the trigger pin (3) by a clearance fit.

9. The control rod control device according to claim 7, wherein the support member (4) comprises two symmetrically arranged supporting teeth that are rotatably connected to a wall surface of the accommodating cavity;
wherein the upper driving rod (1) and the lower driving rod (2) cooperatively define a through slot (14) at a joint of the upper driving rod (1) and the lower driving rod (2), when the trigger pin (3) is in the locked state, opposite inner ends of the supporting teeth are pressed against the trigger pin (3), and outer ends extend into the through slot (14) to lock the lower driving rod (2); when the trigger pin (3) is displaced downward, the opposite inner ends of the supporting teeth are inserted into the second through hole (302), and the outer ends rotate inward and disengage from the through slot (14) of the lower driving rod (2).

10. The control rod control device according to claim 1, wherein multiple through water flow holes (15) are provided in a circumferential direction of the upper driving rod (1) and the lower driving rod, (2) and a joint plane of the upper driving rod (1) and the lower driving rod (2) is also provided with the water flow holes (15).

11. A reactor, comprising a core, a control rod assembly (18) inserted into the core, and a driving mechanism for driving the control rod assembly (18), **characterized in that** the reactor further comprises the control rod control device according to any one of claims 1-10.

## Patentansprüche

1. Steuerstabsteuervorrichtung, umfassend:
eine obere Antriebsstange (1), umfassend eine Aufnahmekavität in einem Inneren der oberen Antriebsstange (1);
eine untere Antriebsstange (2), die lösbar mit einer Unterseite der oberen Antriebsstange (1) verbunden ist;
eine Auslösebaugruppe, die in der Aufnahmekavität angeordnet ist und einen Auslösemechanismus und einen Auslösestift (3) umfasst, wobei der Auslösemechanismus dazu ausgelegt ist, den Auslösestift (3) in einem Verriegelungszustand zu halten, wobei der Auslösemechanismus betätigbar ist, um eine Verschiebung des Auslösestifts (3) auszulösen, wenn sich die obere Antriebsstange (1) mit einer bestimmten Beschleunigung nach oben bewegt; und
ein Stützelement (4), das zwischen der oberen Antriebsstange (1) und der unteren Antriebsstange (2) angeordnet und mit dem Auslösestift (3) verbunden ist;
wobei, wenn sich der Auslösestift (3) im Verriegelungszustand befindet, das Stützelement (4) die untere Antriebsstange (2) stützt, um an einem unteren Abschnitt der oberen Antriebsstange (1) fest angeordnet zu sein; wenn der Auslösestift (3) verschoben ist, das Stützelement (4) sich zusammenklappt und die untere Antriebsstange (2) von der oberen Antriebsstange (1) getrennt wird und durch Schwerkraft abfällt;
wobei der Auslösemechanismus in der Aufnahmekavität angeordnet ist und eine erste Feder (5), ein Auslöseglied (6) und einen Verriegelungsmechanismus (7, 8, 9, 10) umfasst, die in dieser Reihenfolge von oben nach unten angeordnet sind; die erste Feder (5) ein oberes Ende, das an einer Oberseite der Aufnahmekavität befestigt ist, und ein unteres Ende umfasst, das mit dem Auslöseglied (6) fest verbunden ist;
wobei der Verriegelungsmechanismus zwischen dem Auslösestift (3) und dem Auslöseglied (6) angeordnet ist und in einem Verriegelungszustand der Verriegelungsmechanismus den Auslösestift (3) im Verriegelungszustand hält; in einem Auslösezustand das Auslöseglied (6) den Verriegelungsmechanismus zum Entriegeln auslöst und somit den Auslösestift (3) freigibt.

2. Steuerstabsteuervorrichtung nach Anspruch 1, wobei die Aufnahmekavität eine obere Kavität (101) und eine untere Kavität (102) umfasst, die obere Kavität (101) und die untere Kavität (102) jeweils an einer Oberseite und einer Unterseite eines Inneren der oberen Antriebsstange (1) angeordnet sind und eine Verbindungsöffnung (103) zwischen der oberen Kavität (101) und der unteren Kavität (102) vorgesehen ist.

3. Steuerstabsteuervorrichtung nach Anspruch 2, wobei ein Vorsprung (104) an der Unterseite der oberen Antriebsstange (1) befestigt ist und eine mit dem Vorsprung (104) übereinstimmende Nut (201) in einer Oberseite der unteren Antriebsstange (2) ausgebildet ist.

4. Steuerstabsteuervorrichtung nach Anspruch 1, wobei der Verriegelungsmechanismus ein Drückglied (7), eine elastische Lasche (8), einen Drehauslösehebel (9) und einen Stützauslösehebel (10) umfasst;
wobei ein Paar horizontal beabstandeter Halterungen (11) in der Aufnahmekavität befestigt ist, eine Mitte der Halterung (11) eine Gleitöffnung (1101) definiert, ein unterer Abschnitt des Drückglieds (7) gleitend durch die Gleitöffnung (1101) hindurchgeht und eine Unterseite des Drückglieds (7) ein freies Ende der elastischen Lasche (8) kontaktiert und das andere Ende der elastischen Lasche (8) an einer Innenwandfläche der Aufnahmekavität befestigt ist;
wobei der Drehauslösehebel (9) nahe einer Unterseite der elastischen Lasche (8) angeordnet ist und ein Ende des Drehauslösehebels (9) mit der Innenwandfläche der Aufnahmekavität durch eine Torsionsfeder verbunden ist;
wobei ein oberes Ende des Stützauslösehebels (10) an einem freien Ende des Drehauslösehebels (9) liegt, eine Unterseite des Stützauslösehebels (10) drehbar in der Aufnahmekavität angelenkt ist und ein unteres freies Ende des Stützauslösehebels (10) den Auslösestift (3) verriegelt;
wobei, wenn die elastische Lasche (8) gedrückt wird, um sich nach unten zu verformen, der Drehauslösehebel (9) gedrückt werden kann, um sich nach unten zu drehen, um das obere Ende des Stützauslösehebels (10) freizugeben, sodass der Stützauslösehebel (10) gedreht werden kann, um den Auslösestift (3) zu entriegeln.

5. Steuerstabsteuervorrichtung nach Anspruch 4, wobei in einem Grundzustand des Drehauslösehebels (9) ein Hauptkörper des Drehauslösehebels (9) in einer horizontalen Richtung angeordnet ist und parallel zur elastischen Lasche (8) ist und der Stützauslösehebel (10) einen langen Hebel (1001) und einen kurzen Hebel (1002) umfasst, die senkrecht zueinander sind, wobei, wenn der Drehauslösehebel (9) horizontal ist, ein freies Ende des Drehauslösehebels (9) den langen Hebel (1001) stützt, um in einem vertikalen Zustand zu sein, wobei der Stützauslösehebel (10) am Verdrehen gehindert wird.

6. Steuerstabsteuervorrichtung nach Anspruch 4, wobei der Elastizitätskoeffizient der ersten Feder (5), das Gewicht des Auslöseglieds (6) und ein Abstand zwischen dem Auslöseglied (6) und dem Drückglied (7), wenn das Auslöseglied (6) im Normalzustand aufgehängt ist, mit einer Beschleunigung der Aufwärtsbewegung der oberen Antriebsstange (1) übereinstimmen, um sicherzustellen, dass das Auslöseglied (6) während des normalen Betriebs nicht versehentlich mit dem Drückglied (7) kollidiert, nur wenn sich die obere Antriebsstange (1) mit einer großen Beschleunigung nach oben bewegt, die erste Feder (5) gedehnt wird und das Auslöseglied (6) mit dem Drückglied (7) kollidiert, sodass das Drückglied (7) eine Relativverschiebung entlang der Halterungen (11) erzeugt.

7. Steuerstabsteuervorrichtung nach Anspruch 2, wobei ein oberer Abschnitt und ein unterer Abschnitt des Auslösestifts (3) jeweils eine erste Durchgangsöffnung (301) und eine zweite Durchgangsöffnung (302) definieren, eine zweite Feder (13) zwischen dem Auslösestift (3) und einer Oberseite der unteren Kavität (102) verbunden ist und, wenn sich der Auslösestift (3) im Verriegelungszustand befindet, der Auslösemechanismus eingreifend in die erste Durchgangsöffnung (301) eingesetzt ist und die zweite Feder (13) unter Druck gesetzt ist, um Energie zu speichern.

8. Steuerstabsteuervorrichtung nach Anspruch 7, wobei der Auslösestift (3) länglich ist, die Verbindungsöffnung (103) mit dem Auslösestift (3) übereinstimmt und die Verbindungsöffnung (103) mit dem Auslösestift (3) durch eine Spielpassung verbunden ist.

9. Steuerstabsteuervorrichtung nach Anspruch 7, wobei das Stützelement (4) zwei symmetrisch angeordnete Stützzähne umfasst, die mit einer Wandfläche der Aufnahmekavität drehbar verbunden sind;
wobei die obere Antriebsstange (1) und die untere Antriebsstange (2) zusammenwirkend einen Durchgangsschlitz (14) an einer Verbindungsstelle der oberen Antriebsstange (1) und der unteren Antriebsstange (2) definieren, wobei, wenn sich der Auslösestift (3) im Verriegelungszustand befindet, gegenüberliegende innere Enden der Stützzähne gegen den Auslösestift (3) gedrückt sind und äußere Enden sich in den Durchgangsschlitz (14) erstrecken, um die untere Antriebsstange (2) zu verriegeln; wenn der Auslösestift (3) nach unten verschoben ist, die gegenüberliegenden inneren Enden der Stützzähne in die zweite Durchgangsöffnung (302) eingesetzt sind und die äußeren Enden sich nach innen drehen und aus dem Durchgangsschlitz (14) der unteren Antriebsstange (2) ausrücken.

10. Steuerstabsteuervorrichtung nach Anspruch 1, wobei mehrere durchgehende Wasserdurchflussöffnungen (15) in einer Umfangsrichtung der oberen Antriebsstange (1) und der unteren Antriebsstange (2) vorgesehen sind und eine Verbindungsebene der oberen Antriebsstange (1) und der unteren Antriebsstange (2) ebenfalls mit den Wasserdurchflussöffnungen (15) versehen ist.

11. Reaktor, umfassend einen Kern, eine in den Kern eingesetzte Steuerstabbaugruppe (18) und einen Antriebsmechanismus zum Antreiben der Steuerstabbaugruppe (18), **dadurch gekennzeichnet, dass** der Reaktor ferner die Steuerstabsteuervorrichtung nach einem der Ansprüche 1-10 umfasst.

## Revendications

1. Dispositif de commande de barre de commande comprenant
une barre d'entrainement supérieure (1) comprenant une cavité de réception dans un intérieur de la barre d'entraînement supérieure (1) ;
une barre d'entraînement inférieure (2) reliée de manière détachable à une partie inférieure de la barre d'entraînement supérieure (1) ;
un ensemble de déclenchement disposé dans la cavité de réception et comprenant un mécanisme de déclenchement et une goupille de déclenchement (3), le mécanisme de déclenchement étant configuré pour maintenir la goupille de déclenchement (3) dans un état verrouillé, le mécanisme de déclenchement permettant de déclencher le déplacement de la goupille de déclenchement (3) lorsque la barre d'entraînement supérieure (1) se déplace vers le haut avec une certaine accélération ; et
un élément de support (4) disposé entre la barre d'entraînement supérieure (1) et la barre d'entraînement inférieure (2) et relié à la goupille de déclenchement (3) ;
dans lequel, lorsque la goupille de déclenchement (3) est dans un état verrouillé, l'élément de support (4) supporte la barre d'entraînement inférieure (2) de façon à ce qu'elle soit disposée de manière fixe dans une partie inférieure de la barre d'entraînement supérieure (1) ; lorsque la goupille de déclenchement (3) est déplacée, l'élément de support (4) se replie et la barre d'entraînement inférieure (2) se sépare de la barre d'entraînement supérieure (1) et tombe par gravité ;
dans lequel le mécanisme de déclenchement est disposé dans la cavité de réception et comprend un premier ressort (5), un élément de déclenchement (6) et un mécanisme de verrouillage (7, 8, 9, 10) disposés dans cet ordre de haut en bas ; le premier ressort (5) comprend une extrémité supérieure fixée sur une partie supérieure de la cavité de réception et une extrémité inférieure reliée de manière fixe à l'élément de déclenchement (6) ;
dans lequel le mécanisme de verrouillage est disposé entre la goupille de déclenchement (3) et l'élément de déclenchement (6), et dans l'état verrouillé, le mécanisme de verrouillage maintient la goupille de déclenchement (3) dans l'état verrouillé ; dans un état de déclenchement, l'élément de déclenchement (6) déclenche le déverrouillage du mécanisme de verrouillage, libérant ainsi la goupille de déclenchement (3).

2. Dispositif de commande de barre de commande selon la revendication 1, dans lequel la cavité de réception comprend une cavité supérieure (101) et une cavité inférieure (102), la cavité supérieure (101) et la cavité inférieure (102) sont respectivement disposées sur un côté supérieur et un côté inférieur d'un intérieur de la barre d'entraînement supérieure (1), et un trou de liaison (103) est fourni entre la cavité supérieure (101) et la cavité inférieure (102).

3. Dispositif de commande de barre de commande selon la revendication 2, dans lequel un bossage (104) est fixé sur la partie inférieure de la barre d'entraînement supérieure (1), et une rainure (201) adaptée au bossage (104) est formée dans une partie supérieure de la barre d'entraînement inférieure (2).

4. Dispositif de commande de barre de commande selon la revendication 1, dans lequel le mécanisme de verrouillage comprend un élément de poussée (7), une languette élastique (8), un levier de déclenchement à rotation (9) et un levier de déclenchement à support (10) ;
dans lequel une paire de plateaux (11) espacés horizontalement est fixée dans la cavité de réception, un centre du plateau (11) délimite un trou de coulissement (1101), une section inférieure de l'élément de poussée (7) passe de manière coulissante dans le trou de coulissement (1101), et une partie inférieure de l'élément de poussée (7) entre en contact avec une extrémité libre de la languette élastique (8), et l'autre extrémité de la languette élastique (8) est fixée sur une surface de paroi intérieure de la cavité de réception ;
dans lequel le levier de déclenchement à rotation (9) est situé à proximité d'un côté inférieur de la languette élastique (8), et une extrémité du levier de déclenchement à rotation (9) est reliée à la surface de paroi intérieure de la cavité de réception par l'intermédiaire d'un ressort de rotation ;
dans lequel une extrémité supérieure du levier de déclenchement à support (10) bute contre une extrémité libre du levier de déclenchement à rotation (9), une partie inférieure du levier de déclenchement à support (10) est articulée de manière rotative dans la cavité de réception, et une extrémité libre inférieure du levier de déclenchement à support (10) verrouille la goupille de déclenchement (3) ;
dans lequel, lorsque la languette élastique (8) est enfoncée pour se déformer vers le bas, le levier de déclenchement à rotation (9) peut être enfoncé pour tourner vers le bas afin de libérer l'extrémité supérieure du levier de déclenchement à support (10), de façon à ce que le levier de déclenchement à support (10) puisse entrer en rotation pour déverrouiller la goupille de déclenchement (3).

5. Dispositif de commande de barre de commande selon la revendication 4, dans lequel, dans un état naturel du levier de déclenchement à rotation (9), un corps principal du levier de déclenchement à rotation (9) est disposé à l'horizontale et est parallèle à la languette élastique (8), et le levier de déclenchement à support (10) comprend un levier long (1001) et un levier court (1002) perpendiculaires l'un à l'autre, et lorsque le levier de déclenchement à rotation (9) est horizontal, une extrémité libre du levier de déclenchement à rotation (9) maintient le levier long (1001) dans un état vertical, empêchant le levier de déclenchement à support (10) d'entrer en rotation.

6. Dispositif de commande de barre de commande selon la revendication 4, dans lequel le coefficient d'élasticité du premier ressort (5), le poids de l'élément de déclenchement (6) et la distance entre l'élément de déclenchement (6) et l'élément de poussée (7) lorsque l'élément de déclenchement (6) est normalement suspendu sont adaptés à une accélération du mouvement ascendant de la barre d'entraînement supérieure (1) afin de garantir que l'élément de déclenchement (6) ne heurte pas l'élément de poussée (7) par erreur pendant le fonctionnement normal, et ce n'est que lorsque la barre d'entraînement supérieure (1) se déplace vers le haut avec une grande accélération que le premier ressort (5) est étiré et que l'élément de déclenchement (6) entre en collision avec l'élément de poussée (7), de façon à ce que l'élément de poussée (7) produise un déplacement relatif le long des plateaux (11).

7. Dispositif de commande de barre de commande selon la revendication 2, dans lequel une section supérieure et une section inférieure de la goupille de déclenchement (3) délimitent respectivement un premier trou traversant (301) et un second trou traversant (302), un second ressort (13) est relié entre la goupille de déclenchement (3) et une partie supérieure de la cavité inférieure (102), et lorsque la goupille de déclenchement (3) est dans l'état verrouillé, le mécanisme de déclenchement est inséré de manière engagée dans le premier trou traversant (301), et le second ressort (13) est comprimé pour stocker de l'énergie.

8. Dispositif de commande de barre de commande selon la revendication 7, dans lequel la goupille de déclenchement (3) est allongée, le trou de liaison (103) est adapté à la goupille de déclenchement (3), et le trou de liaison (103) est relié à la goupille de déclenchement (3) par un ajustement avec jeu.

9. Dispositif de commande de barre de commande selon la revendication 7, dans lequel l'élément de support (4) comprend deux dents de support disposées symétriquement qui sont reliées de manière rotative à une surface de paroi de la cavité de réception ;
dans lequel la barre d'entraînement supérieure (1) et la barre d'entraînement inférieure (2) délimitent conjointement une fente traversante (14) au niveau d'une jonction entre la barre d'entraînement supérieure (1) et la barre d'entraînement inférieure (2), et lorsque la goupille de déclenchement (3) est dans l'état verrouillé, les extrémités intérieures opposées des dents de support sont appuyées contre la goupille de déclenchement (3), et les extrémités extérieures s'étendent dans la fente traversante (14) pour verrouiller la barre d'entraînement inférieure (2) ; lorsque la goupille de déclenchement (3) est déplacée vers le bas, les extrémités intérieures opposées des dents de support sont insérées dans le second trou traversant (302), et les extrémités extérieures tournent vers l'intérieur et se désolidarisent de la fente traversante (14) de la barre d'entraînement inférieure (2).

10. Dispositif de commande de barre de commande selon la revendication 1, dans lequel plusieurs trous d'écoulement d'eau (15) traversants sont prévus dans une direction circonférentielle de la barre d'entraînement supérieure (1) et de la barre d'entraînement inférieure (2), et un plan de jonction entre la barre d'entraînement supérieure (1) et la barre d'entraînement inférieure (2) est également prévu avec les trous d'écoulement d'eau (15).

11. Réacteur, comprenant un cœur, un ensemble barre de commande (18) inséré dans le cœur et un mécanisme d'entraînement permettant d'entraîner l'ensemble barre de commande (18), **caractérisé en ce que** le réacteur comprend en outre le dispositif de commande de barre de commande selon l'une quelconque des revendications 1 à 10.
